# EUROPEAN PATENT SPECIFICATION

(11) **EP 2 222 457 B1**
(45) Date of publication and mention of the grant of the patent: **01.05.2013**
(21) Application number: 07866824.1
(22) Date of filing: 20.12.2007
(51) Int. Cl.: B32B 5/14, B32B 5/26

(54) **COMPOSITE MATERIAL MADE OF NON-WOVEN FABRIC WITH A HIGH ABSORBING CAPACITY**
AUS VLIESGEWEBE HERGESTELLTES VERBUNDMATERIAL MIT HOHER ABSORPTIONSKAPAZITÄT
MATÉRIAU COMPOSITE HAUTEMENT ABSORBANT À BASE DE NON-TISSÉ

(43) Date of publication of application: 01.09.2010
(73) Proprietor: Fiscatech S.p.A., 27029 Vigevano (PV) (IT)
(72) Inventor: COSTAMAGNA, Achille, I-27029 Vigevano (PV) (IT)
(74) Representative: Long, Giorgio
(86) International application number: PCT/IT2007/000892
(87) International publication number: WO 2009/081421

(56) References cited:
- EP-A- 0 209 775
- WO-A-2007/085884
- US-A- 4 307 152
- US-A- 5 037 409
- DATABASE WPI Week 198608 Thomson Scientific, London, GB; AN 1986-050917 XP002497628 & JP 61 002854 A (null) 8 January 1986 (1986-01-08)

## Description

### FIELD OF INVENTION

**.** The present invention regards a composite material made of non-woven fabric with a high absorbing capacity. In particular, the invention regards a composite material made up of several layers of non-woven fabric fibres joined in such a manner to create at least one layer with a high drainage capacity and at least one layer with a high liquid absorption/retention capacity, alongside the use of such material in the production of semi-finished products intended for clothing, footwear, leather, furnishing, automotive, marine building/constructions, medical, hygiene/cleaning products and filtering industries.

### TECHNICAL BACKGROUND OF THE INVENTION

**.** Over the years, there have been known materials based on non-woven fabrics with different characteristics suitable for specific purposes. For example, known are materials based on non-woven fabrics made up of synthetic fibres and/or microfibres employed in manufacturing bathrobes.

. European patent EP 1 082 918 describes a structure of a bathrobe made of a microfibre non-woven fabric. The non-woven fabric is made up of 6,000 to 15,000 50% polyester and 50% polyamide per cm² microfibres. The bathrobe has a weight comprised between 200 and 400 g and a capacity to absorb up to 400% liquid in weight, with respect to the weight of the non-woven fabric itself.

. Though having good absorption capacity alongside the advantage of having a small volume, the product aforedescribed has limits and drawbacks.

. As a matter of fact, it has been observed that the abovementioned product requires more than 300 seconds to absorb a 1 ml drop of water. This data in any case confirms that absorption requires a substantial period of time thus it is necessary to keep the product in contact with the wet body for a relatively long period of time in such a manner to obtain an efficient absorption of the water.

. In addition, once the liquid has been absorbed, the product remains wet for a long period of time. Consequently, the person wearing a bathrobe made of such material has the uncomfortable feeling of wetness on the skin.

WO 2007/085884 A discloses a wound dressing which includes first and second absorbent layers, the first and second absorbent layers each being of a non-woven fabric of viscose and polyester fibres and being joined together by needle-punching.

### SUMMARY FO THE INVENTION

. Thus, the technical problem on which the present invention is based is that of providing a composite material for manufacturing garments with the better absorption capacity and capable of overcoming the abovementioned uncomfortable feeling of wetness of the products currently in the market at the same time.

. Such problem can be solved by means of a composite material comprising at least two layers of non-woven fabric fibres in such a manner to create at least one layer with a high drainage capacity and one layer with a high liquid absorption/retention capacity, as described in the main claim attached.

### BRIEF DESCRIPTION OF THE DRAWINGS

. Further characteristics and advantages of the present invention shall be clearer from the following description of some embodiments provided for exemplifying and non-limiting purposes with reference to the drawings wherein:

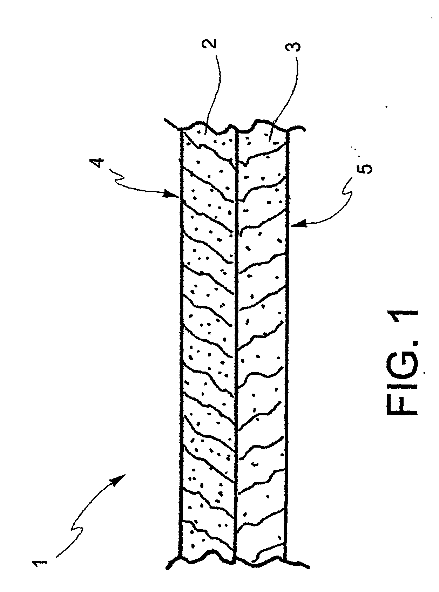

- Figure 1 represents a cross-sectional schematic view of an embodiment of the composite material according to the present invention;
- Figure 2 represents a photograph of a first layer of the material of the invention performed by means a scanning electronic microscope;
- Figure 3 represents a photograph of a second layer of the material of the invention performed with the scanning electron microscope.

### DETAILED DESCRIPTION OF THE INVENTION

. The idea on which the present invention is based is that of manufacturing a material provided with a first surface having ideal properties of absorbing and releasing liquids combined with a second opposite surface having the properties of absorbing and retaining the liquids absorbed by said absorption and releasing surfaces. The first surface should be intended to be in contact with the wet bodies while the second surface should have the purpose of taking the absorbed liquids away from said bodies thus preventing the abovementioned uncomfortable feeling of wetness.

. Various experiments performed to find a material capable of fully meeting such purpose, led to the selection of a composite material 1 comprising at least two layers 2, 3 made of non-woven fabric fibres and/or microfibres joined in such a manner to create at least a first high drainage capacity layer 2 and at least a second high liquid absorption/retention capacity layer 3 characterised in that said first high drainage capacity layer 2 is made up of polyester fibres made hydrophilic by the presence of stable hydrophilic groups and bonded to each other in such a manner to form a capillary structure of micropores smaller than 30 nm possibly interconnected with micropores larger than 30 nm and said second high liquid absorption/retention capacity layer 3 is made up of polyester and/or polyamide fibres and/or microfibres.

. The first layer 2 and the second layer 3 are joined in such a manner to create a first surface 4 for contact with a body or a surface damp or wet by a liquid and a second surface 5 for evaporation opposite to said first surface 4 and, thus, distant from said body.

. In particular, the first layer 2 is formed by a non-woven fabric made up of polymer fibres of polyester, polypropylene, polyethylene, polyolefins or their blends having micropores and possibly macropores treated through hydrofixation according to known techniques in the industry to obtain stable and long-lasting hydrophilic capacities.

. Over the years, fibres with the abovementioned characteristics have been known in the synthetic textiles and non-woven fabrics sector. Hydrophilic, microporous and macroporous structure characteristics can be obtained by coating/treating with hydrophilic substances polymer fibres such as acetate fibres, aramid fibres, polyamide fibres such as nylon, polyester such as polyethylene terephthalate, polyolefins such as polypropylene and polyethylene, polyvinyl alcohol fibres, polyurethane fibres or, still, bi or tri component fibres such as polyethylene/polyethylene terephthalate or polypropylene/polyethylene and subsequently subjecting to the abovementioned process of hydrofixation.

. H. D. Weigmann et al. (Melliland Textilberichte at 470-473, 1976/6) for example describes a treatment of polyester fibres with dimethyl formamide followed by the solvent removal in boiling water. Such treatment is meant to allow the formation of a polyester fibrous structures containing micropores unnoticeable under an optical microscope.

. Various works have been indicated regarding the treatment of polyethylene terephthalate fibres with chemical additives in such a manner to obtain "open cell" structures (US 2,987,373, 3,100,675, 3,513,110). For example, the United States patent US 3,953,405 describes the treatment of polyethylene terephthalate (PET) with up to 15 moles percent of dicarboxylic acid.

**.** Other technologies describe the use of compounds containing metals in order to stabilise polyester against the effects of heat (US 3,475,371, 3,488,318, 3,652493).

. Hydrophilic polymers can be obtained by means of copolymerisation of acrylic compounds with polyesters, irradiation of these and subsequent partial hydrolysis to obtain hydrophilic end groups.

. United States patent US 3,682,846 describes the reaction between a polyester resin with a polyalkene ether and with surfactant metal salt to obtain the hydrophilic properties.

. German patent DE 2554124 describes a dry spinning process employing high boiling point ether alkyls and alcohol ethers, esters and ketones with a spinning solvent such as dimethyl acetamide, dimethyl sulfoxide, N-methylpyrrolidone, or dimethyl formamide in a manner to obtain filaments with a porous core.

. International patent application WO 96/33303 describes a fibre having a permanent hydrophilic surface obtained through finishing obtained through use of an aqueous dispersion comprising a hydrophilic copolyester with repeated segments of a polyoxyethylene diester, a polyalkylene diester and a polypropylene oxide polymer coated at one or both ends with an ester or alkyl group, said polymer having more than four propylene oxide units and a molecular weight of about 300. Another hydrophilic polymer described comprises a blend of organic solvent, a hydrophilic copolyester having repeated segments of a polyoxyethylene diester, a polyalkylene diester and a polypropylene oxide polymer coated at one or both ends with an ester or alkyl group, said polymer having more than four propylene oxide units and a molecular weight of about 300.

. According to the patent application WO 98/42898 processed is a blend comprising a polyolefin, a compound having polar residues such as carboxyl, hydroxyl, amino, oxazoline, imidazoline, epoxy, isocyanate, ester, ether, amid, alcanol amid and a transition metal compound.

. Unites States patent US 6,699,922 describes a non-woven fabric with a permanent hydrophilic surface obtained by employing fibres comprising a polymer containing an effective amount of -C₁₀₋₁₂ fat acid esters of a polyethylene glycol.

. Unites States patent US 4,307,152 describes new hydrophilic polyester fibres obtained through spinning a mass of polyesters comprising a polyester blended with an effective amount of one or more oxalate complexes and the hydrofixation or hydrosetting of said fibres by means of boiling water. It should be observed that the microporous structure and the stability of the hydrophilia are obtained due to the special conditions of hydrofixation operating at temperatures ranging between 90° and 170°, for a period of time comprised between 1 minute and one hour or more depending on whether operating under "batch" conditions or not.

. The term "polyester fibres" with reference to said first layer indicates, in particular, all those fibres derived both from homo and copolyesters known in the industry.. Examples of such polymers are those obtained through reaction of one or more of the following acids or their esters with one or more aliphatic, alicyclic, aromatic or araliphatic alcohols or a bisphenol. Typical acids are adipic, pimelic, suberic, azelaic, sebacic, nonandicarboxylic, terephthalic, isophthalic, alkyl substituted or halogenated terephthalic, alkyl substituted or halogenated isophtalic, nitro-terephthalic, 4,4'-diphenyl ether dicarboxylic, 4,4'-diphenyl thioether dicarboxylic, 4,4'-diphenyl sulfone-dicarboxylic, 4,4'-diphenyl alkylenedicarboxylic, naphthalene-2,6-dicarboxylic, cyclohexane-1,4-dicarboxylic and cyclohexane-1,3-dicarboxylic acids. Typical diols o phenols are ethylene glycol, diethylene glycol, 1,3-propanediol, 1,4-butanediol, 1,6-hexanediol, 1,8-octanediol, 1,10-decanediol, 1,2-propanediol, 2,2-dimethyl-1,3-propanediol, 2,2,4-trimethylhexanediol, p-xylenediol, 1,4-cyclohexanediol, 1,4-cyclohexanedimethanol and bisphenol A.

. Preferably, the fibres employed in said first layer 2 are terephthalic acid polyester and copolyester fibres, especially polyester terephthalate stabilised through hydrofixation and possibly treated in a manner to possess permanent hydrophilic functional groups on their surface according to conventional techniques such as the ones described beforehand. For example, the first layer 2 can be made up of a blend containing a part of co-polyethylene terephthalate/polyethylene terephthalate bonding fibres with melting point at 100-120° C and a part of polyethylene terephthalate fibres.

. More preferably, the fibres are hydrophilic polyester fibres available in the market by the name HYDROFIX® sold by DuPont. Such fibre is characterised by: 1.70 linear density (dtex), 5.3 resistance to tear (cN/dtex), 24.0 degree of elongation (%), 5.5 degree of contraction under dry heat (%), 43.0 crimping rate (per 10 cm), 29.0 crimping tension (%), 90.0 weft cohesion (g/g), 0.11 finishing (%).

**.** Generally, the hydrophilic character can be obtained by means of a chemical or physical binding on the surface of the fibre of groups such as carboxyl, alcoholic, aminic, amidic, polyethoxy, sulfonates, polypropoxy groups and their blends.

. In particular, the fibres have a count comprised between 1.4 and 1.9 dtex (grams of a 10 kilometres long filament), preferably between 1.5 and 1.8, more preferably it is of 1.71 dtex. Furthermore, the fibres can be standard size staple fibres, preferably from 0.3 to 15.5 cm, more preferably 3.8 cm.

. Additionally, the first layer 2 can be of a thickness comprised between 0.2 and 0.6 mm, preferably between 0.3 and 0.5, more preferably the thickness is of 0.3 mm.

. The base weight of said layer 2 can be comprised between 60 and 80 g/m², preferably between 65 and 75 g/m², more preferably it is 69.5 g/m².

. Obviously, the abovementioned parameters shall be adjusted by the man skilled in the art in order to meet specific needs or preferences depending on the use of the material. As a matter of fact, thicknesses, lengths of fibres, degree of porosity of the layer, may vary provided that the special drainage function is guaranteed. In other words, the first layer 2 has the capacity to transmit a liquid through its entire thickness specifically due to the characteristics of both the hydrophilia provided by the type of the hydrophilic fibre and by the porous structure of the layer itself provided by the hydrofixation treatment.

. In particular, the abovementioned hydrofixation treatment can be performed after spinning the abovementioned fibres in presence of liquid water at temperatures comprised between 90° and 170°, preferably between 120°C and 140°C for a period of time ranging from 1 to 45 minutes up to more than one hour in case of "batch" treatment. In addition, the material to be treated must be entirely maintained in contact with the water exceeding at least 30% and preferably exceeding 100% in terms of weight with reference to the weight of the material. The water can be put in contact by immersing the material into a suitable vat or by spraying water directly on the material in such a manner to soak it completely. It should be observed that the water can simply be tap water or provided with additives such as, for example, water soluble salts.

. Subsequently, the material can be cooled by means of running water or rinsed using distilled water, dried through entirely conventional techniques.

. The hydrofixation, rinsing and drying treatments just described above, can be similar to the ones described in the Unites States patent US 4,307,152.

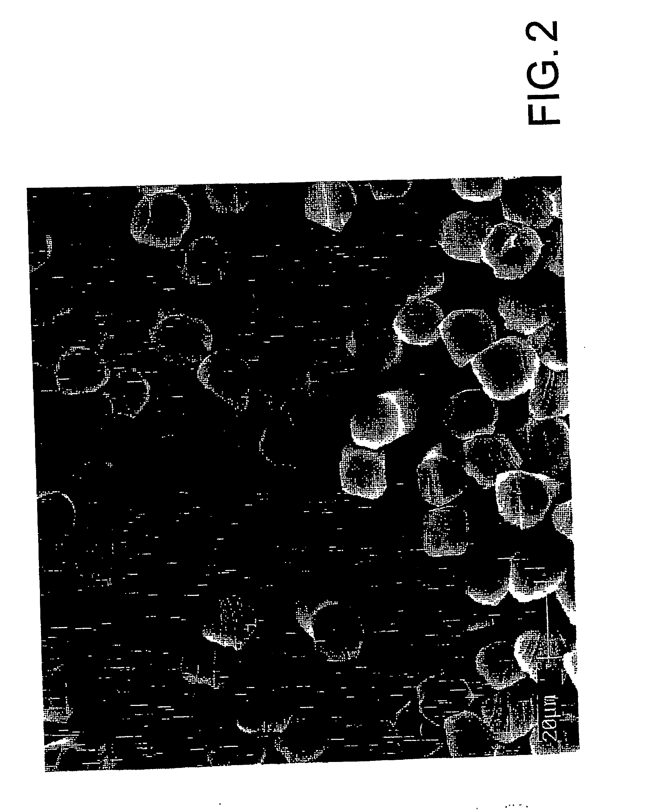

. Furthermore, it has been observed that the structure described above provided with communicating micro and macro pores allows a practically immediate wettability of the layer. As explained beforehand, the micropores smaller than 30 nm are connected to each other and possibly with macropores preferably ranging between 100 and 3000 nm in terms of size, as shown in figure 2.

. It should also be observed that the drained liquids can be easily and practically totally released particularly due to the capacity to transmit, that is let flow, the liquids instead of retaining them.

. The second layer 3 is made of fibres and/or microfibres, preferably made of polyester and/or polyamide. More preferably, it is made up of a 50% polyester and polyamide synthetic non-woven fabric microfibre blend of the conventional type, with denier (weight in grams per 9000 metres of length), comprised between 0.001 and 4.5 Den, preferably between 0.01 and 2.2 Den, with length comprised between 20 mm and 70 mm, preferably between 35 mm and 51 mm. The fibres, in contrast, have values substantially identical to the ones indicated previously with reference to the polyester fibres of the first layer 2.

. The thickness of said layer is comprised between 0.2 mm and 0.6 mm, preferably between 0.4 mm and 0.5 mm, the weight is comprised between 50 g and 80 g, preferably between 60g and 70g, the amount of fibre per cm² is comprised between 600-1400 fibres and preferably between 700 and 800 fibres/cm². It should be observed that the number of fibres indicated, regardless of the fact that they can be split or exploded to form microfibres, allows to obtain a more sparse three-dimensional structure with respect to the structure obtained by means of the product described in the aforementioned EP 1 082 918 patent. As a consequence, larger spaces form between the fibres or microfibres in such a manner that on one side more liquid is absorbed and retained and on the other side there is a surface in contact with the external in order to increase the degree of evaporation.

. The fibres of the first 2 and of the second 3 layer are manufactured according to the methods known in the industry, thus they shall not be described in details herein. Generally, once made available the polymers exemplified above, the fibres can be manufactured through an entirely conventional spinning process. Subsequently, such fibres can be possibly cut to the desired lengths and joined to each other to form the single layers through for example technologies called "dry-lay", such as carding, "air-laid" thus leading to short fibre webs or layers or "staple fibres".

. Then, the single first 2 and the second 3 layers are joined to each other according to similarly conventional methods of the non-woven fabric industry. For example, it is possible to join said layers by means of mechanical needle punching, thermowelding or, preferably hydroentanglement or their combinations.

. When using hydrontanglement, the first 2 and the second 3 layer suitable overlapped pass under conventional high pressure water nozzles. Such technique, entirely conventional, is used to manufacture non-woven fabrics known as "spunlaced". Generally, said sheets can be subjected to a pressure from water jets coming from the nozzle approximately ranging between 4 and 135 bars, preferably between 20 and 120 bars, more preferably between 50 and 100 bars.

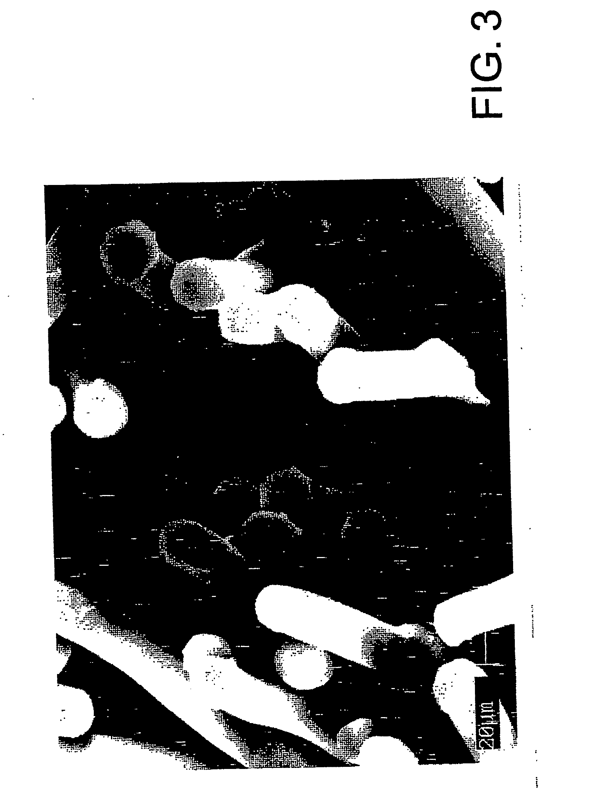

. It should be observed that when intending to manufacture the abovementioned second layer 3 with at least part of microfibres, the spun or carded layer is initially made up of fibres which are split or disassembled into microfibres during the step of hydroentanglement performed to join the first layer with said second layer. As a matter of fact, according to conventional processes, splittable fibres made up of 2 - 16 components can be spun on a suitable support and subsequently subjected to the action of small high pressure water jets in order to obtain the separation of said components to yield the microfibres, as represented in figure 3.

. Alternatively, to manufacture a layer of microfibres it is also possible to employ the technology known as "nanoval process" in which, in brief, a fibre is spun through a special nozzle in which the pressure difference between the interior of said nozzle and the external atmospheric pressure triggers the explosion of the fibres in microfibres upon exit from said nozzle.

. The final thickness of the material 1 of the present invention may range between 0.4 and 1.2 mm, preferably between 0.4 and 0.7 mm. The weight can range between 110 and 160 g/m², preferably between 110 and 130 g/m².

**.** Furthermore, it has been observed that the resistance of the material 1 along the machine direction is of 330-350 N/5 cm and the resistance in the cross machine direction is of 230-240 N/5 cm. This resistance makes it particularly suitable for use as household linen or as napkins used for example for winding/unwinding distributors in which the product, once wet, is subjected to tractions which could otherwise cause tears in case of conventional products.

**.** Some experiments were performed in order to evaluate the efficiency of the material subject of the invention.

. In particular, the period required for the absorption 1 ml drop of water, settled on the surface 5 of the first sheet 2, according to the UNI 827/87 standard part 16 with acclimatisation and test under normal atmosphere at (20±2) °C - (65±4)% R.H., was calculated. The time calculated is less than a second, in other words absorption of a drop of water is basically instantaneous.

. The calculation of the time required to dry was performed using the MIP 503/'06 Rev. 2 method and the Skin Model equipment under the same conditions of acclimatisation and test described beforehand. The average value upon 3 drying tests (At) was 37 minutes for an average value of the 440% average amount of water absorbed with respect to the weight of the material. It should be observed that the test is performed positioning the test tube with the end usually facing the body positioned in direct contact with the hot/transpiring plate.

**.** Calculation of the absorption capacity of the water was established according to the UNI EN ISO 9073/04 standard part 6 under the same acclimatisation and normal atmospheric test conditions described beforehand. The average absorption capacity (LAC) was 552.4% with respect to the weight of the material with an approximate margin of 6.27%.

. As mentioned in the introduction of the present description, the material 1 of the invention can be used for manufacturing items for household linen or for industrial purposes. For example, said material can be used to manufacture napkins, towels, bathrobes and other items requiring the availability of a material provided with a high liquid absorption capacity surface and quick transfer of the liquid in contact with a body to a surface opposite to said absorption/transfer surface with a high retention capacity of said liquid.

. More generally, the abovementioned products may also include cloths used in the kitchen or for any other surface requiring drying. As a matter of fact, specifically due to the characteristics of the material of the invention, not only are the liquids poured absorbed very quickly but they can also be easily released upon simple wringing. Advantageously, in this case the cloth can be used several times thus avoiding waste of material.

. Otherwise, should the material be used for the manufacture of linen, for example such as bathrobes, the capacity to absorb and quickly transfer water from the first layer 2 in contact with the body of a person alongside the capacity of the second layer 3 to keep the absorbed water off the body offers the advantage of preventing the uncomfortable feeling of wetness observable when using conventional items.

. For the same reasons just explained beforehand, the material of the invention is particularly useful for manufacturing clothing items, especially sportswear. As a matter of fact, a clothing item with the abovementioned characteristics is extremely comfortable given that it allows quick transfer of body sweat towards the external during sports activities. As a matter of fact, the absorption/transfer properties of the first layer in contact with the body and the retention/evaporation properties of the second outer layer help to keep the body dry.

. Additionally, given that the material of the present invention is extremely light and thin, the items manufactured are much easier to handle. For example, though guaranteeing equivalent, if not better, efficiency at use, a bathrobe manufactured using the material 1 can be taken along for a journey weighing little and occupying remarkably small space with respect to the traditional bathrobes.

. Described below is an embodiment of the invention provided strictly for exemplifying and non-limiting purposes.

### MANUFACTURING A LAYER WITH A HIGH LIQUID ABSORPTION AND TRANSFER CAPACITY

. Bales of hydrophilic polyester sold by Advansa under the trade name of HYDROFIX® in flakes weighing 229 kg, formed by 1.7 dtex fibres, length 38 mm and identified by the manufacturer as type 160 NSD are loaded into a carding machine where they are subjected to opening of the fibres. Once open, the fibres are arranged in a continuous manner along a conveyor belt in such a manner to form a web. Subsequently, the web reaches a plaiter, which spreads the web on a further conveyor belt arranged in a transverse manner with respect to its line of movement and with the to and from movement synchronised in a such a manner to fold each single web over itself to form a three-web structure. The three-web structure thus formed continuously passes to a needle punching equipment to pre-consolidate the three-web structure, troublesome to move itself, forming a single layer of 0.3 mm thick HYDROFIX® polyester.

### MANUFACTURING A LAYER WITH A HIGH LIQUID RETENTION CAPACITY

. Bales of 229 kg microfibre 50% polyester - 50% polyamide, formed by splittable fibres 2.2 den, length 51 mm and provided by Textrade (Taiwan) are loaded into a carding machine where they are subjected to opening of the fibres. Once open, the fibres are arranged in a continuous manner along a conveyor belt in such a manner to form a web. Subsequently, the web reaches a plaiter, which spreads the web on a further conveyor belt arranged in a transverse manner with respect to its line of movement and with the to and from movement synchronised in a such a manner to fold each single web over itself to form a three-web structure. The three-web structure thus formed continuously passes to a needle punching equipment to pre-consolidate the three-web structure, troublesome to move itself, forming a single layer of 50% polyester and 50% polyamide 0.4 mm thick.

### MANUFACTURING A DOUBLE LAYER MATERIAL MADE UP OF ONE LAYER WITH A HIGH LIQUID ABSORPTION AND TRANSFER CAPACITY AND A LAYER WITH A HIGH LIQUID ABSORPTION AND RETENTION CAPACITY.

. An abovementioned layer with a high liquid absorption and transfer capacity is overlapped on a layer with a high liquid retention capacity by means of a first conveyor belt arranged above a second conveyor belt intended to transport the layer with a high liquids retention capacity. Subsequently, the layers thus overlapped are transported by a perforated belt under a series of water jets to perform the hydroentanglement operations. Hydroentanglement is performed by means of demineralised water jets at different pressures during the forward movement of said perforated belt in which the first three groups operate on the side facing the HYDROFIX^{®} layer, while the second three groups operate on the side facing the 50% polyester - 50% polyamide layer: first group of Perfojet injectors at 50 bars, second group of Perfojet injectors at 65 bars, third group of injectors at 65 bars, fourth group of Perfojet injectors at 100 bars, fifth group of Perfojet injectors at 100 bars, sixth group of Perfojet injectors at 80 bars. At this point, the two hydroentangled layers pass inside a cylinder furnace for the drying step. Upon exit from the furnace, the semi-processed material has a 0.6 mm thickness and it is wound into rolls ready to be moved to the subsequent machining lines, such as dyeing, or they can be unwound and machined further in the line.

. Once the material has been formed, it is cut and machined for the production of items used for linens or cloths for cleaning, clothing, footwear, leather, furnishing, automotive, marine, building/construction, medical, and hygiene/filtering products industries.

## Claims

1. Composite material (1) comprising at least two layers (2, 3) of non-woven fabric fibres joined in a manner to create at least a first layer (2) with a high drainage capacity and at least a second layer (3) with a high liquids absorption/retention capacity, **characterised in that** said first layer (2) with a high drainage capacity is made up of polyester fibres made hydrophilic due to the presence of stable hydrophilic groups and joined to each other to form a capillary structure of micropores smaller than 30 nm possibly interconnected with macropores larger than 30 nm and are staple fibres, preferably of dimension ranging between 0.3 and 15.5 cm, and have a count comprised between 1.4 and 1.9 dtex and said second layer (3) with a high liquid absorption/retention capacity is made up of polyester and/or polyamide fibres and/or microfibres.

2. Material (1) according to claim 1, wherein said first layer (2) and said second layer (3) are joined in a manner to create a first surface (4) of contact with a body or surface damp or wet by a liquid and a second surface (5) of evaporation opposite to said first surface (4).

3. Material (1) according to claim 1 or 2, wherein said first layer (2) is formed by a non-woven fabric made up of polyester, polypropylene, polyethylene or polyolefins polymer fibres treated through a hydrofixation process.

4. Material (1) according to claim 3, wherein said polymer fibres are selected among acetate, polyester, polyolefin fibres, polyvinyl alcohol fibres, polyurethane fibres or bi or tri component fibres.

5. Material (1) according to claim 3, wherein the polymer fibres are polyethylene terephthalate, polypropylene or polyethylene.

6. Material (1) according to claim 3, wherein the polyester fibres are treated with dimethyl formamide, with compounds containing metals or polyalkene ethers and with a surfactant metal salt.

7. Material (1) according to claim 3, wherein the fibres are polyethylene terephthalate treated with chemical additives or with dicarboxylic acid.

8. Material (1) according to claim 3, wherein acrylic compounds are copolymerised with polyesters, irradiated and partially hydrolysed.

9. Material (1) according to claim 3, wherein alkyl ethers and high boiling point alcohol ethers, esters and ketones are spun with a spinning solvent such as dimethylacetamide, dimethyl sulfoxide, N-methylpyrrolidone or dimethylformamide.

10. Material (1) according to claim 3, wherein the polymer derives from a blend of an organic solvent a hydrophilic copolyester having repeated segments of a polyoxyethylene diester, a polyalkylene diester, and a polypropylene oxide polymer coated at one or both ends with an ester or alkyl group, said polymer having more than four units of propylene oxide and a molecular weight of about 300.

11. material (1) according to claim 3, wherein the fibre derives from a blend comprising a polyolefin, a compound having polar residues such as carboxyl, hydroxy, amino, oxazoline, imidazoline, epoxy, isocyanate, ester, ether, amide, alkanol amide and a transition metal compound.

12. Material (1) according to claim 3, wherein the fibres comprise a polymer containing an effective amount of - C₁₀₋₁₂ acid fat esters of a polyethylene glycol.

13. Material (1) according to claim 3, wherein the hydrophilic polyester fibres are obtained through spinning a mass of polyester comprising a polyester blended with an effective amount of one or more oxalate complexes and the hydrofixation of said fibres by means of boiling water.

14. Material (1) according to claim 3, wherein said polymers are selected among polymers obtained through reaction of one or more acids or their esters with one or more aliphatic, alicyclic, aromatic or araliphatic alcohols or a bisphenol.

15. Material (1) according to claim 14, wherein the acids or their esters are adipic, pimelic, suberic, azelaic, sebacic, nonane dicarboxylic, terephthalic, isophthalic, alkyl substituted or halogenated terephthalic, alkyl substituted or halogenated isophthalic, nitro-terephthalic, 4,4'-diphenyl ether dicarboxylic, 4,4'-diphenyl thioether dicarboxylic, 4,4'-diphenyl sulfone-dicarboxylic, 4,4'-diphenyl alkylene dicarboxylic, naphthalin-2,6-dicarboxylic, cyclohexane-1,4-dicarboxylic and cyclohexane-1,3-dicarboxylic acids, the diols or phenols are ethylene glycol, diethylene glycol, 1,3-propanediol, 1,4-butanediol, 1,6-hexanediol, 1,8-octanediol, 1,10-decanediol, 1,2-propanediol, 2,2-dimethyl-1,3-propanediol, 2,2,4-trimethylhexanediol, p-xylenediol, 1,4-cyclohexanediol, 1,4-cyclohexanedimethanol and bisphenol A.

16. Material (1) according to claim 3, wherein the fibres are terephthalic acid polyesters and copolyesters fibres stabilised through hydrofixation.

17. Material (1) according to claim 16, wherein the fibres are polyethylene terephthalate stabilised through hydrofixation.

18. Material (1) according to claim 17, wherein the fibres are a blend containing a part of fibres of co-polyethylene terephthalate/polyethylene terephthalate binding with a 100 - 120°C melting point and a part of polyethylene terephtalate fibres.

19. Material (1) according to any of claims 3 - 18, wherein the fibres of said first layer are hydrophilic polyester fibres available in the market under trade name of HYDROFIX^{®} sold by DuPont.

20. Material (1) according to any of claims 1 - 19, wherein the first layer (2) has a thickness comprised between 0.2 e 0.6 mm, a base weight comprised between 50 and 80 g/m².

21. Material (1) according to any of claims 1 - 20, wherein the second layer (3) is made up of a blend of 50% microfibres of non-oven fabrics of polyester and polyamide.

22. Material (1) according to any of claims 1 - 21, wherein the second layer has a microfibres with denier comprised between 0.001 e 4.5 den and length comprised between 20 mm and 70 mm.

23. Material (1) according to any of claims 1 - 22, wherein the second layer has a thickness comprised between 0.2 and 0.6 mm and weight comprised between 50 and 80 g/m².

24. Material (1) according to any of claims 1 - 23, wherein the second layer has an amount of fibres per cm² comprised between 600 and 1400.

25. Material (1) according to any of claims 1 - 24, having a thickness comprised between 0.4 and 1.2 mm, a weight comprised between 110 and 160 g/m², a tensile strength in the machine direction of 330-350 N/5cm and in the cross machine direction on of 230-240 N/5cm.

26. Material (1) according to claim 1, wherein the time required to absorb a 1 ml drop of water, settled on said first layer (2), is less than one second, the time required to dry being 37 minutes for a 440% average value of the average amount of water absorbed with respect to the weight of the material, the water absorption capacity being 552.4% with respect to the weight of the material.

27. Items for linen, clothes, footwear, leather, furnishing, automotive, marine building/construction, medical products, hygiene products or cleaning cloths manufactured with the material (1) according to any of the preceding claims.

28. Items according to claim 27 comprising napkins, bathrobes, cloths for kitchens or any other surfaces requiring drying, sportswear garments.

## Patentansprüche

1. Verbundmaterial (1), umfassend mindestens zwei Schichten (2, 3) von Vliesstoff-Fasern, verbunden in einer Art um mindestens eine erste Schicht (2) mit einer hohen Entwässerungskapazität und mindestens eine zweite Schicht (3) mit einer hohen Flüssigkeiten-Absorptions-/Rückhalte-Kapazität zu schaffen, **dadurch gekennzeichnet, dass** die erste Schicht (2) mit einer hohen Entwässerungskapazität aus Polyesterfasern besteht, welche hydrophil gemacht sind durch die Anwesenheit von stabilen hydrophilen Gruppen und miteinander verbunden sind, um eine kapillare Struktur von Mikroporen kleiner als 30 nm, möglicherweise untereinander verbunden mit Makroporen größer als 30 nm, zu bilden, und Stapelfasern sind, bevorzugt von einer Dimension zwischen 0,3 und 15,5 cm, und einen Titer zwischen 1,4 und 1,9 dtex haben, und die zweite Schicht (3) mit einer hohen Flüssigkeiten-Absorptions-/Rückhalte-Kapazität aus Polyester- und/oder Polyamidfasern und/oder Microfasern besteht.

2. Material (1) nach Anspruch 1, wobei die erste Schicht (2) und die zweite Schicht (3) in einer Art verbunden sind, um eine erste Kontaktoberfläche (4) mit einem Körper oder einer Oberfläche, welcher/welche feucht oder nass von einer Flüssigkeit ist, und eine zweite Verdunstungsoberfläche (5) gegenüber der ersten Oberfläche (4) zu schaffen.

3. Material (1) nach Anspruch 1 oder 2, wobei die erste Schicht (2) gebildet wird aus einem Vliesstoff bestehend aus Polyester-, Polypropylen-, Polyethylen- oder Polyolefinepolymerfasern, behandelt durch ein Hydrofixierungsverfahren.

4. Material (1) nach Anspruch 3, wobei die Polymerfasern ausgewählt sind aus Acetat, Polyester, Polyolefinfasern, Polyvinylalkoholfasern, Polyurethanfasern oder Bi- oder Tri-Komponentenfasern.

5. Material (1) nach Anspruch 3, wobei die Polymerfasern Polyethylenterephthalat, Polypropylen oder Polyethylen sind.

6. Material (1) nach Anspruch 3, wobei die Polyesterfasern behandelt sind mit Dimethylformamid, mit Verbindungen, welche Metalle oder Polyalkenether enthalten, und mit einem oberflächenaktiven Metallsalz.

7. Material (1) nach Anspruch 3, wobei die Fasern Polyethylenterephthalat sind, welche mit chemischen Zusatzstoffen oder mit Dicarbonsäure behandelt sind.

8. Material (1) nach Anspruch 3, wobei acrylische Verbindungen mit Polyestern copolymerisiert, bestrahlt und teilweise hydrolysiert sind.

9. Material (1) nach Anspruch 3, wobei Alkylether und Alkoholether mit hohem Siedepunkt, Ester und Ketone mit einem Spinnlösungsmittel wie beispielsweise Dimethylacetamid, Dimethylsulfoxid, N-Methylpyrrolidon oder Dimethylformamid gesponnen werden.

10. Material (1) nach Anspruch 3, wobei das Polymer aus einer Mischung eines organischen Lösungsmittels, eines hydrophilen Copolyesters mit wiederholten Abschnitten eines Polyoxyethylendiesters, eines Polyalkylendiesters, und eines Polypropylenoxidpolymers, welches an einem oder beiden Enden mit einer Ester- oder Alkylgruppe beschichtet ist, gewonnen wird, wobei das Polymer mehr als vier Einheiten von Propylenoxid und ein Molekulargewicht von ungefähr 300 aufweist.

11. Material (1) nach Anspruch 3, wobei die Faser aus einer Mischung, umfassend ein Polyolefin, eine Verbindung mit polaren Resten, wie beispielsweise Carboxyl, Hydroxyl, Amino, Oxazolin, Imidazolin, Epoxy, Isocyanat, Ester, Ether, Amid, Alkanolamid, und eine Übergangsmetallverbindung, gewonnen wird.

12. Material (1) nach Anspruch 3, wobei die Fasern ein Polymer, welches eine wirksame Menge von -C₁₀₋₁₂ Fettsäure-Estern eines Polyethylenglycols enthält, umfassen.

13. Material (1) nach Anspruch 3, wobei die hydrophilen Polyesterfasern erhalten werden durch Spinnen einer Masse von Polyester, welche einen Polyester gemischt mit einer wirksamen Menge eines oder mehrerer Oxalatkomplexe/s umfasst, und die Hydrofixierung der Fasern mittels kochenden Wassers.

14. Material (1) nach Anspruch 3, wobei die Polymere ausgewählt sind aus Polymeren, welche durch Reaktion einer oder mehrerer Säure/n oder deren Estern mit einem oder mehreren aliphatischen, alicyclischen, aromatischen oder araliphatischen Alkoholen oder einem Bisphenol erhalten werden.

15. Material (1) nach Anspruch 14, wobei die Säuren oder deren Ester Adipin-, Pimelin-, Suberin-, Azelain-, Sebacin-, Nonan-Dicarbon-, Terephthal-, Isophthal-, Alkyl-substituierte oder halogenierte Terephthal-, Alkyl-substituierte oder halogenierte Isophthal-, Nitro-Terephthal-, 4,4'-Diphenyletherdicarbon-, 4,4'-Diphenylthioetherdicarbon-, 4,4'-Diphenylsulfondicarbon-, 4,4'-Diphenylalkylendicarbon-, Naphthalin-2,6-dicarbon-, Cyclohexan-1,4-dicarbon- und Cyclohexan-1,3-dicarbonsäuren sind, die Diole oder Phenole Ethylenglycol, Diethylenglycol, 1,3-Propandiol, 1,4-Butandiol, 1,6-Hexandiol, 1,8-Octandiol, 1,10-Decandiol, 1,2-Propandiol, 2,2-Dimethyl-1,3-Propandiol, 2,2,4-Trimethylhexandiol, p-Xylendiol, 1,4-Cyclohexandiol, 1,4-Cyclohexandimethanol und Bisphenol A sind.

16. Material (1) nach Anspruch 3, wobei die Fasern Terephthalsäurepolyester- und Copolyester-Fasern, stabilisiert durch Hydrofixierung, sind.

17. Material (1) nach Anspruch 16, wobei die Fasern Polyethylenterephthalat, stabilisiert durch Hydrofixierung, sind.

18. Material (1) nach Anspruch 17, wobei die Fasern eine Mischung, wel c h e einen Teil von Fasern von Co-Polyethylenterephthalat/Polyethylenterephthalat bindend mit einem 100 - 120 °C Schmelzpunkt und einen Teil von Polyethylenterephthalatfasern enthalten, sind.

19. Material (1) nach einem der Ansprüche 3-18, wobei die Fasern der ersten Schicht hydrophile Polyesterfasern sind, welche auf dem Markt unter Handelsnamen von HYDROFIX® erhältlich sind, verkauft von DuPont.

20. Material (1) nach einem der Ansprüche 1-19, wobei die erste Schicht (2) eine Dicke zwischen 0,2 und 0,6 mm, ein Basisgewicht zwischen 50 und 80 g/m² aufweist.

21. Material (1) nach einem der Ansprüche 1-20, wobei die zweite Schicht (3) aus einer Mischung von 50% Microfasern aus Vliesstoff aus Polyester und Polyamid besteht.

22. Material (1) nach einem der Ansprüche 1-21, wobei die zweite Schicht eine Microfaser mit Denier zwischen 0,001 und 4,5 den und Länge zwischen 20 mm und 70 mm aufweist.

23. Material (1) nach einem der Ansprüche 1-22, wobei die zweite Schicht eine Dicke zwischen 0,2 und 0,6 mm und ein Gewicht zwischen 50 und 80 g/m² aufweist.

24. Material (1) nach einem der Ansprüche 1-23, wobei die zweite Schicht eine Menge von Fasern pro cm² zwischen 600 und 1400 aufweist.

25. Material (1) nach einem der Ansprüche 1-24, welches eine Dicke zwischen 0,4 und 1,2 mm, ein Gewicht zwischen 110 und 160 g/m², eine Zugfestigkeit in der Maschinenrichtung von 330-350 N/5cm und quer zur Maschinenrichtung von 230-240 N/5cm aufweist.

26. Material (1) nach Anspruch 1, wobei die Zeit, welche nötig ist um einen auf die erste Schicht (2) abgeschiedenen 1 ml Wassertropfen zu absorbieren, weniger als eine Sekunde ist, die Zeit, welche nötig ist um zu trocknen, 37 Minuten ist für einen 440% durchschnittlichen Wert von der durchschnittlichen Menge an absorbiertem Wasser in Bezug zu dem Gewicht des Materials, die Wasserabsorptionskapazität 552,4% ist in Bezug zu dem Gewicht des Materials.

27. Artikel für Leinenmaterial, Bekleidung, Fußbekleidung, Leder, Einrichtung, Fahrzeugbereich, Seebau/-konstruktion, medizinische Produkte, Hygieneprodukte oder Reinigungstextilien, hergestellt mit dem Material (1) nach einem der vorhergehenden Ansprüche.

28. Artikel nach Anspruch 27, umfassend Servietten, Bademäntel, Tücher für Küchen oder jegliche andere Oberflächen, welche Trocknen benötigen, Sportbekleidung.

## Revendications

1. Matériau composite (1) comprenant au moins deux couches (2, 3) de fibres de non-tissé reliées de manière à créer au moins une première couche (2) ayant une capacité de drainage élevée et au moins une deuxième couche (3) ayant une capacité élevée d'absorption/rétention des liquides, **caractérisé en ce que** ladite première couche (2) ayant une capacité de drainage élevée est faite de fibres de polyester rendues hydrophiles en raison de la présence de groupes hydrophiles stables et reliées les unes aux autres pour former une structure capillaire de micropores de taille inférieure à 30 nm éventuellement interconnectés avec des macropores de taille supérieure à 30 nm et qui sont des fibres courtes, de préférence d'une dimension située dans la plage de 0,3 à 15,5 cm, et qui ont un titrage compris entre 1,4 et 1,9 dtex, et **en ce que** ladite deuxième couche (3) ayant une capacité élevée d'absorption/rétention des liquides est faite de fibres de polyester et/ou polyamide et/ou de microfibres.

2. Matériau (1) selon la revendication 1, dans lequel ladite première couche (2) et ladite deuxième couche (3) sont reliées de manière à créer une première surface (4) de contact avec un corps ou une surface mouillé(e) ou humidifié(e) par un liquide et une deuxième surface (5) d'évaporation opposée à ladite première surface (4).

3. Matériau (1) selon la revendication 1 ou 2, dans lequel ladite première couche (2) est constituée d'un non-tissé fabriqué à partir de polyester, de polypropylène, de polyéthylène ou de fibres de polymères polyoléfiniques traitées à l'aide d'un procédé d'hydrofixation.

4. Matériau (1) selon la revendication 3, dans lequel lesdites fibres de polymères sont choisies parmi l'acétate, le polyester, les fibres de polyoléfine, les fibres d'alcool polyvinylique, les fibres de polyuréthane ou les fibres à deux ou trois composants.

5. Matériau (1) selon la revendication 3, dans lequel les fibres de polymères sont du téréphtalate de polyéthylène, du polypropylène ou du polyéthylène.

6. Matériau (1) selon la revendication 3, dans lequel les fibres de polyester sont traitées avec du formamide de diméthyle, avec des composés contenant des métaux ou des éthers de polyalcène et avec un sel de métal tensioactif.

7. Matériau (1) selon la revendication 3, dans lequel les fibres sont du téréphtalate de polyéthylène traité avec des additifs chimiques ou avec de l'acide dicarboxylique.

8. Matériau (1) selon la revendication 3, dans lequel les composés acryliques sont copolymérisés avec des polyesters, irradiés et partiellement hydrolysés.

9. Matériau (1) selon la revendication 3, dans lequel les éthers d'alkyle et les éthers d'alcool à point d'ébullition élevé, les esters et les cétones sont filés à l'aide d'un solvant de filage tel que le diméthylacétamide, le sulfoxyde de diméthyle, la N-méthylpyrrolidone ou le diméthylformamide.

10. Matériau (1) selon la revendication 3, dans lequel le polymère est dérivé d'un mélange d'un solvant organique, d'un copolyester hydrophile ayant des segments répétitifs d'un diester de polyoxyéthylène, d'un diester de polyalkylène et d'un polymère d'oxyde de polypropylène revêtu à une ou aux deux extrémités d'un groupe ester ou alkyle, ledit polymère ne comportant pas plus de quatre unités d'oxyde de propylène et ayant un poids moléculaire d'environ 300.

11. Matériau (1) selon la revendication 3, dans lequel la fibre est dérivée d'un mélange comprenant une polyoléfine, un composé comportant des résidus polaires tels qu'un groupe carboxyle, hydroxyle, amino, oxazoline, imidazoline, époxy, isocyanate, ester, éther, amide, amide d'alcanol et un composé à base de métal de transition.

12. Matériau (1) selon la revendication 3, dans lequel les fibres comprennent un polymère contenant une quantité efficace d'esters d'acides gras en C₁₀ à C₁₂ d'un polyéthylène glycol.

13. Matériau (1) selon la revendication 3, dans lequel les fibres de polyester hydrophiles sont obtenues par filage d'une masse de polyester comprenant un polyester mélangé à une quantité efficace d'un ou plusieurs complexes à base d'oxalate et hydrofixation desdites fibres à l'aide d'eau en ébullition.

14. Matériau (1) selon la revendication 3, dans lequel lesdits polymères sont choisis parmi les polymères obtenus par réaction d'un ou plusieurs acides ou de leurs esters avec un ou plusieurs alcools aliphatiques, alicycliques, aromatiques ou araliphatiques ou un bisphénol.

15. Matériau (1) selon la revendication 14, dans lequel les acides ou leurs esters sont les acides adipique, pimélique, subérique, azélaïque, sébacique, nonane dicarboxylique, téréphtalique, isophthalique, téréphtalique substitué par un groupe alkyle ou halogéné, isophthalique substitué par un groupe alkyle ou halogéné, nitro-téréphtalique, 4,4'-diphényl éther dicarboxylique, 4,4'-diphényl thioéther dicarboxylique, 4,4'-diphényl sulfone-dicarboxylique, 4,4'-diphényl alkylène dicarboxylique, naphthalin-2,6-dicarboxylique, cyclohexane-1,4-dicarboxylique et cyclohexane-1,3-dicarboxylique, les diols ou les phénols sont l'éthylène glycol, le diéthylène glycol, le 1,3-propanediol, le 1,4-butanediol, le 1,6-hexanediol, le 1,8-octanediol, le 1,10-décanediol, le 1,2-propanediol, le 2,2-diméthyl-1,3-propanediol, le 2,2,4-triméthylhexanediol, le p-xylènediol, le 1,4-cyclohexanediol, le 1,4-cyclohexanediméthanol et le bisphénol A.

16. Matériau (1) selon la revendication 3, dans lequel les fibres sont les fibres de polyesters et de copolyesters d'acide téréphtalique stabilisées par hydrofixation.

17. Matériau (1) selon la revendication 16, dans lequel les fibres sont du téréphtalate de polyéthylène stabilisé par hydrofixation.

18. Matériau (1) selon la revendication 17, dans lequel les fibres sont un mélange contenant une part de fibres de téréphtalate de co-polyéthylène/téréphtalate de polyéthylène se liant à un point de fusion de 100 à 120 °C et une part de fibres de téréphtalate de polyéthylène.

19. Matériau (1) selon l'une quelconque des revendications 3 à 18, dans lequel les fibres de ladite première couche sont des fibres de polyester hydrophiles disponibles dans le commerce sous le nom de marque HYDROFIX^{®} vendues par DuPont.

20. Matériau (1) selon l'une quelconque des revendications 1 à 19, dans lequel la première couche (2) a une épaisseur comprise entre 0,2 et 0,6 mm et un poids de base compris entre 50 et 80 g/m².

21. Matériau (1) selon l'une quelconque des revendications 1 à 20, dans lequel la deuxième couche (3) est faite d'un mélange de 50 % de microfibres de non-tissé de polyester et de polyamide.

22. Matériau (1) selon l'une quelconque des revendications 1 à 21, dans lequel la deuxième couche a une microfibre dont le denier est compris entre 0,001 et 4,5 den et la longueur est comprise entre 20 mm et 70 mm.

23. Matériau (1) selon l'une quelconque des revendications 1 à 22, dans lequel la deuxième couche a une épaisseur comprise entre 0,2 et 0,6 mm et un poids compris entre 50 et 80 g/m².

24. Matériau (1) selon l'une quelconque des revendications 1 à 23, dans lequel la deuxième couche a une quantité de fibres par cm² comprise entre 600 et 1 400.

25. Matériau (1) selon l'une quelconque des revendications 1 à 24, ayant une épaisseur comprise entre 0,4 et 1,2 mm, un poids compris entre 110 et 160 g/m², une solidité à la rupture dans le sens machine de 330 à 350 N/5 cm et dans le sens transversal à la machine de 230 à 240 N/5 cm.

26. Matériau (1) selon la revendication 1, dans lequel le temps nécessaire pour absorber une goutte d'eau de 1 ml, déposée sur ladite première couche (2), est inférieur à une seconde, le temps nécessaire au séchage étant de 37 minutes pour une valeur moyenne de 440 % de la quantité moyenne d'eau absorbée par rapport au poids du matériau, la capacité d'absorption de l'eau étant de 552,4 % par rapport au poids du matériau.

27. Articles pour toile de lin, vêtements, chaussures, cuir, ameublement, véhicules automobiles, fabrication de bateaux/construction, produits médicaux, produits d'hygiène ou torchons fabriqués à l'aide du matériau (1) selon l'une quelconque des revendications précédentes.

28. Articles selon la revendication 27 comprenant les serviettes de table, les peignoirs, le linge de cuisine ou destiné à toute autre surface nécessitant un séchage, et les vêtements de sport.
